# EUROPÄISCHE PATENTANMELDUNG

(11) **EP 4 495 035 A1**
(43) Veröffentlichungstag der Anmeldung: **22.01.2025**
(21) Anmeldenummer: 24180355.0
(22) Anmeldetag: 06.06.2024
(51) Int. Cl.: B65G 53/46, B65G 53/56

(54) **DICHTUNGSANORDNUNG UND BAUGRUPPE FÜR DIE SCHÜTTGUT-FÖRDERUNG MIT EINER DERARTIGEN DICHTUNGSANORDNUNG**

(30) Priorität: 20.07.2023 DE 102023206882
(71) Anmelder: Coperion GmbH, 70469 Stuttgart (DE)
(72) Erfinder: Schädler, Manfred, 88213 Ravensburg (DE); Rolser, Luca, 88339 Bad Waldsee (DE); Dürr, Michael, 88364 Wolfegg (DE); Zinser, Bruno, 88289 Waldburg (DE)
(74) Vertreter: Rau, Schneck & Hübner Patentanwälte Rechtsanwälte PartGmbB

(57) **Zusammenfassung**

Eine Dichtungsanordnung für eine Baugruppe für die Schüttgutförderung umfasst ein Gehäuse (2) mit einer Schüttgut-Zuführöffnung (3) und mit mindestens einer Schüttgut-Abführöffnung (4, 5), eine im Gehäuse (2) verlagerbar angeordnete Bewegungskomponente (6) sowie eine an dem Gehäuse (2) oder an der Bewegungskomponente (6) ausgebildete Dichtungsnut (28), in der mindestens ein Dichtungselement (29, 30; 29a) angeordnet ist, wobei das mindestens eine Dichtungselement (29, 30; 29a) einen Dichtungsquerschnitt mit einer zumindest abschnittsweise konkav ausgebildeten Außenkontur (34) aufweist, einen Fixierstab (38; 38a), mit dem das mindestens eine Dichtungselement (29, 30; 29a) in der Dichtungsnut (28; 28a) gehalten ist, wobei der Fixierstab (38; 38a) zumindest abschnittsweise an der konkav ausgebildeten Außenkontur (34) anliegt.

## Beschreibung

Der Inhalt der deutschen Patentanmeldung DE 10 2023 206 882.6 wird durch Bezugnahme hierin aufgenommen.

Die Erfindung betrifft eine Dichtungsanordnung und eine Baugruppe für die Schüttgut-Förderung, insbesondere eine Schüttgut-Weiche, mit einer derartigen Dichtungsanordnung.

DE 34 14 074 A1 offenbart eine Ringdichtung für eine Schüttgut-Weiche, wobei die Ringdichtung eine Kerbe für verbesserte Dichtungseigenschaften aufweist. Es hat sich gezeigt, dass, insbesondere bei niedrigen Förderdrücken, nicht sichergestellt ist, dass die auf die Dichtung wirkenden Drucckräfte den Spalt zwischen Gehäuse und Drehkörper zuverlässig verschlie-ßen. Insbesondere ein Schalten der Weiche, also beim Drehen des Drehteils, kann Schüttgut in die Dichtungsnut gelangen und insbesondere die Ringdichtung aus der Dichtungsnut herausziehen. Eine höhere Anpressung der Dichtung in der Dichtungsnut ist wegen des damit verbundenen Abriebs der Dichtung unerwünscht. Abrieb führt zu einem schnelleren Verschleiß der Dichtung und zu einer Verunreinigung des geförderten Schüttguts. Die Dichtung in der Dichtungsnut zu verkleben, ist mit Blick auf einen Austausch der Dichtung und der kaum vorhersagbaren Haltedauer der Klebeverbindung nachteilig.

EP 0 344 584 B1 und DE 199 52 435 A1 offenbaren Schüttgutweichen mit Dichtungen, die in Folge einer Druckbeaufschlagung in eine Dichtungsnut zusätzlich eingepresst werden. Für die Druckbeaufschlagung der Dichtung sind komplexe Druckkanäle erforderlich. Der Aufbau einer derartigen Schüttgut-Weiche ist kompliziert.

Es ist die Aufgabe der vorliegenden Erfindung, eine zuverlässige Abdichtung für eine Baugruppe für die Schüttgutförderung, insbesondere entlang einer Förderleitung, bereitzustellen, wobei die Abdichtung insbesondere unkompliziert und robust ausgeführt ist und die insbesondere zuverlässig gegen Schüttgut und Wasser aus einem Förderstrom abdichtet.

Diese Aufgabe ist erfindungsgemäß gelöst durch eine Dichtungsanordnung mit den im Anspruch 1 angegebenen Merkmalen sowie durch eine Baugruppe mit den in Anspruch 10 angegebenen Merkmalen.

Erfindungsgemäß wurde erkannt, dass eine Baugruppe für die Schüttgutförderung vorteilhaft, insbesondere zuverlässig gegen Wasser und Schüttgut, abgedichtet ist, wenn eine Dichtungsanordnung mindestens ein in einer Dichtungsnut angeordnetes Dichtungselement umfasst, das mittels eines Fixierstabs in der Dichtungsnut gehalten ist. Der Fixierstab ist ein längliches und insbesondere einteilig ausgebildetes Fixierelement. Es wurde überraschend gefunden, dass eine einerseits unkomplizierte und andererseits zuverlässige Fixierung des Dichtungselements in der Dichtungsnut mechanisch, insbesondere durch Klemmung, gewährleistet ist.

Es wurde insbesondere erkannt, dass die Dichtungsanordnung und die Baugruppe für die Schüttgutförderung, insbesondere entlang einer Förderleitung, insbesondere in einem Rohrfördersystem für Schüttgut, vorteilhaft sind. Eine derartige Schüttgutförderung ist beispielsweise die pneumatische Schüttgutförderung, insbesondere die Schüttgutförderung mittels eines druckbeaufschlagten Fluids. Das Fluid kann ein Gas und/oder eine Flüssigkeit sein. Insbesondere umfasst die Schüttgutförderung die pneumatische Schüttgutförderung, insbesondere die pneumatische Feuchtförderung von Schüttgut, und die hydraulische Schüttgutförderung.

Die Baugruppe umfasst ein Gehäuse mit einer Schüttgut-Zuführöffnung und mit mindestens einer Schüttgut-Abführöffnung. Das Gehäuse kann auch mehrere, insbesondere genau zwei, Schüttgut-Abführöffnungen aufweisen. In dem Gehäuse ist eine Bewegungskomponente verlagerbar angeordnet. Die Bewegungskomponente ist insbesondere ein Stellelement, das zwischen verschiedenen Stellpositionen schaltbar angeordnet ist. Die Bewegungskomponente ist insbesondere um eine Drehachse drehbar oder bezüglich einer Längsachse linear verschiebbar in dem Gehäuse angeordnet. Entsprechend kann die Bewegungskomponente als Drehteil, als Klappe- oder als Schieberplatte ausgeführt sein. Das Drehteil weist einen Durchgangskanal auf, der abhängig von der Drehposition des Drehteils bezüglich der Drehachse die Schüttgut-Zuführöffnung mit einer der Schüttgut-Abführöffnungen zur Schüttgutförderung verbindet. Die Baugruppe ist beispielsweise eine Schüttgut-Weiche oder ein Absperrschieber.

Insbesondere ist die Bewegungskomponente, insbesondere das Drehteil, mit einem Antrieb gekoppelt. Die Bewegungskomponente ist insbesondere motorisch antreibbar in dem Gehäuse angeordnet. Das Drehteil ist bezüglich der Drehachse insbesondere zylindrisch oder kegelstumpfförmig ausgeführt.

Das Gehäuse weist insbesondere eine Innenbohrung auf, in die das Drehteil angesetzt ist. Die Innenkontur der Innenbohrung korrespondiert zu der Außenkontur des Drehteils. Entsprechend ist die Innenkontur der Innenbohrung zylindrisch und/oder konisch ausgeführt. An der Schüttgut-Zuführung und/oder an den Schüttgut-Abführöffnungen können stutzenartige Verbindungselemente angeordnet und insbesondere einteilig an dem Gehäuse angeformt sein. Die Verbindungselemente können jeweils einen Verbindungsflansch aufweisen. Die Schüttgut-Zuführöffnung und die Schüttgut-Abführöffnungen definieren eine Förderebene. Die Drehachse des Drehteils ist quer und insbesondere senkrecht zur Förderebene orientiert.

Die Dichtungsnut kann an der Bewegungskomponente und/oder an dem Gehäuse ausgebildet sein. Die Dichtungsnut ist als Außennut, also als Vertiefung an einer Außenseite der Bewegungskomponente und/oder an einer Innenseite des Gehäuses, ausgeführt und erstreckt sich insbesondere entlang einer Längsrichtung, also linear. Die Längsrichtung kann beispielsweise parallel zur Drehachse des Drehteils oder quer, insbesondere senkrecht zur Verlagerungsrichtung der Schieberplatte orientiert sein. Die Dichtungsnut wird auch als Längsnut bezeichnet.

Eine profilartige Ausführung des Fixiestabs ist unkompliziert. Der Fixierstab kann insbesondere als Endlosprofil in einem kontinuierlichen Fertigungsverfahren aus Kunststoffmaterial oder Metall kosteneffizient hergestellt und auf die erforderliche Länge entlang einer Profillängsachse abgelängt werden. Der Fixierstab weist einen Profilquerschnitt auf, der insbesondere als Vollquerschnitt ausgeführt ist. Alternativ kann der Fixierstab auch mit einem Hohlquerschnitt als Hohlstab oder mit einem offenen Profilquerschnitt als Profilstab ausgeführt sein.

Der Profilquerschnitt des Fixierstabs ist insbesondere an seiner Außenseite rund. Es versteht sich, dass der Profilquerschnitt auch unrund, insbesondere oval oder polygonal, ausgeführt sein kann. Dadurch können insbesondere gezielt Spreizkräfte von dem Fixierstab auf den Dichtungsquerschnitt des Dichtungselements ausgeübt werden.

Der Fixierstab ermöglicht eine unkomplizierte Fixierung des mindestens einen Dichtungselements. Der Fixierstab ist insbesondere entlang der Dichtungsnut, insbesondere parallel zur Drehachse des Drehteils oder quer, insbesondere senkrecht, zur Verlagerungsrichtung der Schieberplatte, angeordnet.

Der Fixierstab bewirkt eine verbesserte Klemmung des mindestens einen Dichtungselements in der Dichtungsnut, insbesondere durch Kraftschluss und/oder durch Reibschluss. Es wurde insbesondere erkannt, dass mit dem Fixierstab eine höhere Klemmkraft auf das mindestens eine Dichtungselement ausgeübt werden kann. Die Haltekraft, die das mindestens eine Dichtungselement in der Dichtungsnut hält, ist erhöht und insbesondere größer als eine Haltekraft, die sich ausschließlich in Folge einer elastischen Deformation des mindestens einen Dichtungselements in der Dichtungsnut ergeben kann. Das mindestens eine Dichtungselement ist insbesondere aus einem Dichtungsmaterial ausgeführt, insbesondere aus einem Elastomermaterial und insbesondere aus Silikonkautschuk.

Der Fixierstab weist entlang seiner Profillängsachse eine Fixierstablänge auf, die mindestens das Doppelte eines maximalen Durchmessers des Fixierstabs beträgt, insbesondere mindestens das Dreifache, insbesondere mindestens das Fünffache, insbesondere mindestens das Zehnfache, insbesondere mindestens das Zwanzigfache, insbesondere mindestens das Fünfzigfache, insbesondere mindestens das Einhundertfache und insbesondere höchstens das Eintausendfache. Bei einer runden Außenkontur des Querschnitts des Fixierstabs ist der maximale Durchmesser der Kreisdurchmesser. Bei einer polygonalen Außenkontur entspricht der maximale Durchmesser der maximalen Diagonalen. Wenn der Fixierstab einen offenen Profilquerschnitt aufweist, kann der maximale Durchmesser beispielsweise mit dem Flächenschwerpunkt und einem maximalen Abstand von dem Flächenschwerpunkt zu einer Außenkontur bestimmt werden.

Der Fixierstab ist insbesondere aus einem Material hergestellt, das härter ist, als das Dichtungsmaterial des mindestens einen Dichtungselements. Dadurch ist insbesondere sichergestellt, dass der Fixierstab geeignet ist, das Dichtungselement zu deformieren. Der Fixierstab ist insbesondere aus einem metallischen Werkstoff, insbesondere aus Stahl hergestellt.

Die Dichtungsnut weist entlang Ihrer Längsrichtung eine Nutlänge auf. Die Fixierstablänge beträgt mindestens 50 % der Nutlänge, insbesondere von mindestens 70 %, insbesondere von mindestens 80 %, insbesondere von mindestens 90 %, insbesondere von mindestens 95 % und insbesondere die gesamte Nutlänge oder mehr. Insbesondere ragt der Fixierstab jeweils stirnseitig an der Dichtungsnut in Längsrichtung über.

Das mindestens eine Dichtungselement weist einen Dichtungsquerschnitt auf, dessen Außenkontur zumindest abschnittsweise konkav ausgebildet ist. Der Dichtungsquerschnitt ist in einer Ebene senkrecht zu einer Längsachse des mindestens einen Dichtungselements definiert. Die Anordnung des Fixierstabs an dem mindestens einen Dichtungselement an der konkav ausgebildeten Außenkontur ist vereinfacht. Die mit dem Fixierstab erreichbare Klemmkraft ist erhöht. Insbesondere ist die mechanische Zusammenwirkung zwischen dem Fixierstab und dem mindestens einen Dichtungselement verbessert.

Bei einer Anordnung des Fixierstabs zumindest abschnittsweise an der konkav ausgebildeten Außenkontur ist die mechanische Klemmung des mindestens einen Dichtungselements zusätzlich verbessert.

Eine Dichtungsanordnung gemäß Anspruch 2 gewährleistet eine besonders vorteilhafte Klemmung des mindestens einen Dichtungselements mit dem Fixierstab. Der Fixierstab kann in einer Kerbe eines Dichtungsquerschnitts des mindestens einen Dichtungselements angeordnet sein. Die Kerbe ist durch die konkav ausgebildete Außenkontur gebildet. Die Kerbe bildet einen definierten Deformationsbereich des mindestens einen Dichtungselements. Das mindestens eine Dichtungselement kann vorteilhaft mit dem Fixierstab in der Kerbe deformiert werden. Das mindestens eine Dichtungselement kann elastisch deformiert und in die Dichtungsnut zusätzlich eingepresst werden. Die Kerbe ist an dem Dichtungsquerschnitt V- oder U-förmig ausgeführt. Die Kontur des Dichtungsquerschnitts ist infolge die Kerbe im Wesentlichen K- oder B-förmig ausgeführt. Die Kerbe erstreckt sich insbesondere quer zu einer Tiefenrichtung der Dichtungsnut, insbesondere senkrecht zur Tiefenrichtung, also entlang einer Breitenrichtung der Dichtungsnut.

Mehrere Dichtungselemente gemäß Anspruch 3, insbesondere genau zwei Dichtungselemente, ermöglichen eine vorteilhafte Funktionsintegration mehrerer Dichtungen und deren gemeinsame Klemmung mit einem, insbesondere einzigen, Fixierstab in der Dichtungsnut. Insbesondere ist es möglich, verschiedene Formdichtungen in einer Dichtungsnut anzuordnen und miteinander zu kombinieren.

Wenn mehrere und insbesondere alle Dichtungselemente mit einer konkav ausgebildeten Außenkontur, insbesondere einer Kerbe, ausgeführt sind, kann der Fixierstab in den Kerben mehrerer und insbesondere aller Dichtungselemente angeordnet sein. Ein, insbesondere ein einziger, Fixierstab kann zum elastischen Deformieren mehrerer und insbesondere aller Dichtungselemente verwendet werden.

Dadurch, dass mehrere Dichtungselemente in der Dichtungsnut angeordnet sind, ist die Anzahl der Dichtungsnuten insgesamt reduziert. Der Fertigungsaufwand für die Herstellung der Dichtungsanordnung ist reduziert.

Eine Anordnung der Dichtungselemente gemäß Anspruch 4 ist insbesondere kompakt und platzsparend.

Eine Ausführung des Dichtungsquerschnitts gemäß Anspruch 5 gewährleistet eine zusätzlich verbesserte Abdichtung der Bewegungskomponente, insbesondere des Drehteils, gegenüber dem Gehäuse, insbesondere an einer Innenfläche des Gehäuses. Das mindestens eine Dichtungselement weist eine Dichtfläche auf, die unmittelbar an einer Kontaktfläche der jeweils anderen Komponente abdichtend anliegt. Die Kontaktfläche ist insbesondere die Innenfläche des Gehäuses. Die Dichtfläche wird auch als Gehäusedichtfläche bezeichnet. Die Dichtfläche weist insbesondere eine konvexe Außenkontur auf, die insbesondere halbkreisförmig und insbesondere kantenfrei, ausgeführt ist. Die Dichtfläche ragt an der Dichtungsnut vor, insbesondere in radialer Richtung bezogen auf die Drehachse, und wird insbesondere gegen die Kontaktfläche gepresst. Das mindestens eine Dichtungselement wird insbesondere im Bereich der Dichtfläche zusätzlich elastisch deformiert, wodurch die Haltekraft in der Dichtungsnut zusätzlich erhöht ist.

Eine Ausführung des Dichtungsquerschnitts gemäß Anspruch 6 ermöglicht eine zusätzliche Funktionsintegration, insbesondere an dem Dichtungselement selbst. Der Dichtungsquerschnitt weist eine erste Dicke und eine zweite Dicke auf, die kleiner ist die erste Dicke. Mit der zweiten Dicke ist das mindestens eine Dichtungselement im Nutgrund der Dichtungsnut angeordnet. Das mindestens eine Dichtungselement ist stabil und zuverlässig in der Dichtungsnut gehalten. Insbesondere ist die zweite Dicke mindestens so groß wie eine Nutbreite der Dichtungsnut im Nutgrund. Insbesondere beträgt die zweite Dicke mindestens 101 % der Nutbreite der Dichtungsnut im Nutgrund, insbesondere mindestens 102 %, insbesondere mindestens 105 %, insbesondere mindestens 110 % und insbesondere höchstens 115 %.

Die erste Dicke ist kleiner als die Nutbreite der Dichtungsnut und beträgt insbesondere höchstens 85 %, insbesondere höchstens 90 %, insbesondere höchstens 95 % und insbesondere höchstens 98 % der Nutbreite der Dichtungsnut. Insbesondere beträgt die erste Dicke mindestens 80 % der Nutbreite. Aufgrund der ersten Dicke ist das mindestens eine Dichtungselement in der Dichtungsnut beweglich angeordnet. Das Verhältnis der ersten Dicke zur zweiten Dicke beträgt insbesondere mindestens 0,75, insbesondere mindestens 0,8, insbesondere mindestens 0,85, insbesondere mindestens 0,9, insbesondere mindestens 0,95 und insbesondere höchstens 0,98.

Entlang der Nuttiefenrichtung ragt das Dichtungselement an der Dichtungsnut vor mit einer Vorsprungshöhe, die insbesondere mindestens 2 % Nuttiefe der Dichtungsnut beträgt und insbesondere höchstens 20 %, insbesondere höchstens 15 %, insbesondere höchstens 10 % und insbesondere höchstens 5 %.

Eine Dichtungsanordnung gemäß Anspruch 7 ermöglicht eine zuverlässige Anordnung des Fixierstabs an der Bewegungskomponente. In diesem Fall ist die Dichtungsnut an der Bewegungskomponente ausgeführt. Eine Befestigung des Fixierstabs selbst an dem Drehteil ist insbesondere dadurch ermöglicht, dass der Fixierstab in axialer Richtung, insbesondere beidseitig, an der Dichtungsnut vorsteht. Der Fixierstab ragt also stirnseitig an der Dichtungsnut vor und kann vorteilhaft in entsprechenden Ausnehmungen oder Bohrungen in den Stirnwänden des Drehteils gehalten sein. Insbesondere sind die Montage und die Demontage des Fixierstabs in der Dichtungsnut vereinfacht. Der Fixierstab kann in axialer Richtung durch die Bohrungen in den Stirnwänden des Drehteils in die Außennut eingeschoben werden.

Eine Ausführung des mindestens einen Dichtungselements gemäß Anspruch 8 ermöglicht eine zusätzliche Funktionsintegration bei der Abdichtung der Bewegungskomponente, insbesondere in Form des Drehteils. Das mindestens eine Dichtungselement ist eine umlaufende Formdichtung, die also endlos ausgeführt ist. Die Anordnung der Formdichtung an dem Drehteil ist vordefiniert und fehlersicher möglich. Die Formdichtung ist eindeutig an der Bewegungskomponente, insbesondere am Drehteil, festgelegt. Die Formdichtung weist insbesondere zwei Axialabschnitte und zwei Umfangsabschnitte auf, die entlang der Formdichtung abwechselnd hintereinander angeordnet und miteinander verbunden sind. Die Umfangsabschnitte sind jeweils in Umfangsrichtung bezüglich der Drehachse in einer Ebene senkrecht zur Drehachse angeordnet. Die Umfangsabschnitte sind insbesondere in einer stirnseitigen Vertiefung an dem Drehteil angeordnet.

Die Dichtungsnut gemäß Anspruch 9 ist unaufwändig in der Herstellung. Insbesondere wurde erkannt, dass spezielle und insbesondere aufwändig herzustellende Nutkonturen, die beispielsweise schwalbenschwanzförmig ausgeführt sein können, nicht erforderlich sind, um eine hohe Klemmkraft der Dichtungselemente in der Dichtungsnut zu gewährleisten. Die Ausgestaltung der Dichtungsnut ist vereinfacht.

Eine Baugruppe gemäß Anspruch 10 weist im Wesentlichen die Vorteile der Dichtungsanordnung auf, worauf hiermit verwiesen wird. Die Baugruppe dient insbesondere für die pneumatische Schüttgutförderung, insbesondere für die pneumatische Feuchtförderung. Es wurde erkannt, dass sich im Förderstrom aufgrund der Feuchtförderung ein Gemisch aus Schüttgut und Wasser bilden kann. Die Baugruppe ist wegen der Dichtungsanordnung insbesondere geeignet, zuverlässig gegen Wasser und Schüttgut abzudichten. Die Baugruppe ist insbesondere eine Schüttgut-Weiche, bei der die Bewegungskomponente als Drehteil ausgeführt ist, das bezüglich der Drehachse drehbar im Gehäuse angeordnet ist.

Sowohl die in den Patentansprüchen angegebenen Merkmale als auch die in dem Ausführungsbeispiel einer erfindungsgemäßen Dichtungsanordnung angegebenen Merkmale sind jeweils für sich alleine oder in Kombination miteinander geeignet, den erfindungsgemäßen Gegenstand weiterzubilden.

Die jeweiligen Merkmalskombinationen stellen hinsichtlich der Weiterbildungen des Erfindungsgegenstandes keine Einschränkung dar, sondern weisen im Wesentlichen lediglich beispielhaften Charakter auf.

Weitere Merkmale, Vorteile und Einzelheiten der Erfindung ergeben sich aus der nachfolgenden Beschreibung von Ausführungsbeispielen anhand der Zeichnung. Es zeigen:
- Fig. 1: eine perspektivische Explosionsdarstellung einer Baugruppe in Form einer Schüttgut-Weiche mit einer Dichtungsanordnung gemäß einem ersten Ausführungsbeispiel,
- Fig. 2: einen Querschnitt der Schüttgut-Weiche in Fig. 1 in einer Ebene senkrecht zur Drehachse des Drehteils,
- Fig. 3: eine vergrößerte Detaildarstellung des Details III in Fig. 2,
- Fig. 4: eine vergrößerte Ansicht eines Längsschnitts in einer die Drehachse und die Dichtungsnut enthaltenden Schnittebene,
- Fig. 5: eine Fig. 3 entsprechende Darstellung einer Dichtungsanordnung gemäß einem zweiten Ausführungsbeispiel mit einem einzigen Dichtungselement in der Dichtungsnut.

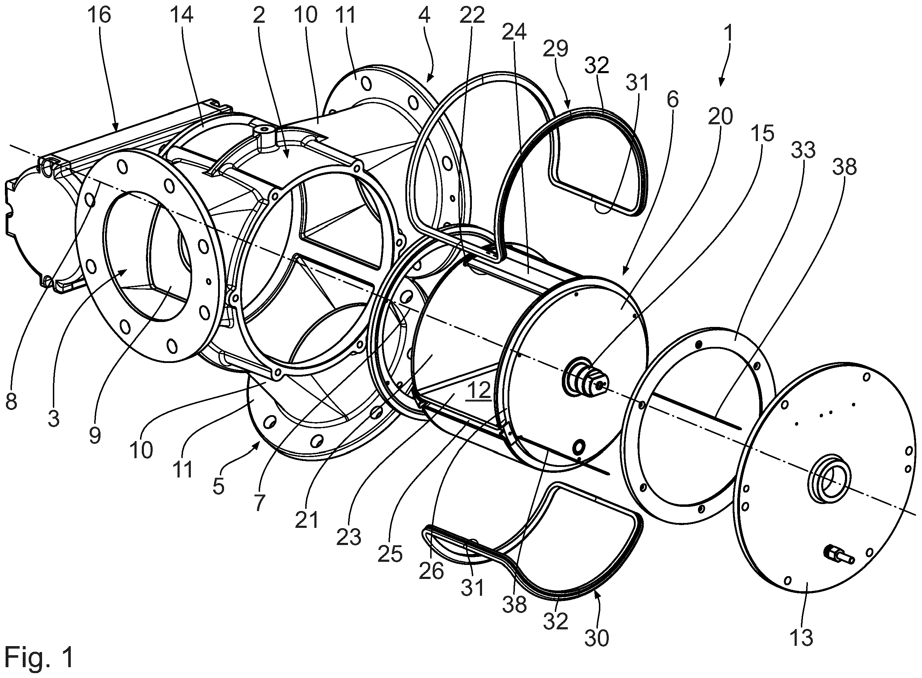

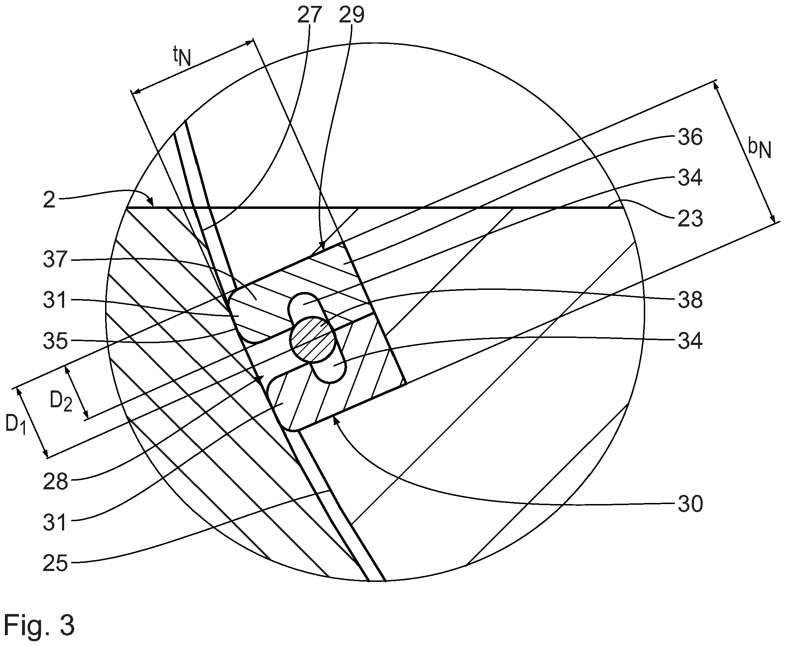

Eine in Fig. 1 bis 4 dargestellte Weiche 1 dient zur Förderung von Schüttgut. Die Weiche 1 ist eine Schüttgut-Weiche. Als Schüttgut dient insbesondere partikelförmiges und/oder pulverförmiges Material, insbesondere Kunststoffgranulat oder partikel- und/oder pulverförmige Lebensmittel.

Das Schüttgut wird insbesondere pneumatisch gefördert, insbesondere unter Zugabe von Wasser und/oder unter Verwendung von feuchtem Schüttgut.

Die Weiche 1 ist als 3-Wege-Weiche ausgeführt. Die Weiche 1 weist ein Gehäuse 2 auf mit einer Schüttgut-Zuführöffnung 3 und zwei Schüttgut-Abführöffnungen 4, 5. Die Schüttgut-Zuführöffnung 3 dient zum Zuführen von Schüttgut in die Weiche 1. Die Schüttgut-Abführöffnungen 4, 5 dienen zum Abführen von Schüttgut aus der Weiche 1. Die Schüttgut-Zuführöffnung 3 und die Schüttgut-Abführöffnungen 4, 5, insbesondere deren Mittellinien, legen eine Förderebene fest.

Das Gehäuse 2 weist eine bezüglich einer Mittellängsachse 8 zylindrisch ausgeführte Innenbohrung 9 auf. Die Schüttgut-Zuführöffnung 3 und die Schüttgut-Abführöffnungen 4, 5 münden in die Innenbohrung 9. Das Gehäuse 2 weist jeweils einen der Schüttgut-Zuführöffnung 3 und den Schüttgut-Abführöffnungen 4, 5 zugeordneten Rohrstutzen 10 mit Befestigungsflansch 11 auf. Die Rohrstutzen 10 sind jeweils einteilig am Gehäuse 2 angeformt. Mit den Rohrstutzen 10 und den Befestigungsflanschen 11 kann die Weiche 1 vorteilhaft in eine Förderleitung, insbesondere eine pneumatische Förderleitung, integriert und/oder daran angeschlossen werden. Das Gehäuse 2 ist insbesondere als Metallgussteil einteilig hergestellt. Es ist auch denkbar, die Rohrstutzen 10 an dem Gehäuse anzuschweißen.

In dem Gehäuse 2 ist ein Drehteil 6 angeordnet. Das Drehteil 6 ist bezüglich einer Drehachse 7, die senkrecht zur Förderebene orientiert ist, in dem Gehäuse 2 drehbar angeordnet. Das Drehteil 6 ist bezüglich der Mittellängsachse 8 konzentrisch in der Innenbohrung 9 angeordnet, so dass die Mittellängsachse 8 und die Drehachse 7 zusammenfallen.

Das Drehteil 6 ist bezüglich der Drehachse 7 zylindrisch ausgeführt. Das Drehteil 6 weist einen Durchgangskanal 12 auf, der sich quer und insbesondere senkrecht zur Drehachse 7 erstreckt. In Abhängigkeit der Drehposition des Drehteils 6 bezüglich der Drehachse 7 sind entweder die Schüttgut-Zuführöffnung 3 und die Schüttgut-Abführöffnung 4 oder die Schüttgut-Zuführöffnung 3 und die Schüttgut-Abführöffnung 5 mit dem Durchgangskanal für die Schüttförderung miteinander verbunden. Die jeweils andere Schüttgut-Abführöffnung 5 bzw. 4 ist dann durch das Drehteil 6 abgedichtet, also durch das Drehteil 6 zuverlässig abgesperrt.

Jeweils stirnseitig bezüglich der zylindrischen Innenbohrung 9 weist das Gehäuse 2 einen ersten Gehäuse-Seitendeckel 13 und einen zweiten Gehäuse-Seitendeckel 14 auf. Die Gehäuse-Seitendeckel 13, 14 weisen jeweils eine konzentrisch zur Mittellängsachse 8 des Gehäuses 2 orientierte Lageröffnung auf, die zur Aufnahme von Lagerstutzen 15 des Drehteils 6 dient. Das Drehteil 6 ist um die Drehachse 7 drehbar gelagert in dem Gehäuse 2 angeordnet. Einer der Lagerstutzen 15 ist mechanisch mit einem Antrieb 16, insbesondere einem Elektromotor, gekoppelt. Für die mechanische Kopplung des Antriebs 16 mit dem Drehteil 6 ist insbesondere ein Kupplungselement vorhanden.

Die Gehäuse-Seitendeckel 13, 14 sind jeweils stirnseitig am Gehäuse 2 lösbar befestigt, insbesondere mit Befestigungsschrauben angeschraubt und mittels einer umlaufenden Seitendeckeldichtung abgedichtet.

Das Drehteil 6 weist zwei gegenüberliegend angeordnete Stirnwände 20, 21 auf, an denen jeweils ein Lagerstutzen 15 befestigt, insbesondere eingepresst ist. Die erste Stirnwand 20 ist im eingebauten Zustand des Drehteils 6 im ersten Gehäuse-Seitendeckel 13 zugewandt. Entsprechend ist die zweite Stirnwand 21 im eingebauten Zustand des Drehteils 6 dem zweiten Gehäuse-Seitendeckel 14 und insbesondere dem Antrieb 16 zugewandt. Die Stirnwände 20, 21 sind jeweils senkrecht zur Drehachse 7 orientiert.

Die Stirnwände 20, 21 sind mit einer ersten Querwand 22 und einer zweiten Querwand 23 miteinander verbunden. Die Querwände 22, 23 erstrecken sich jeweils parallel zur Drehachse 7. Die Querwände 22, 23 begrenzen die Durchströmöffnung, also den Durchgangsquerschnitt, des Durchgangskanals 12. Im Bereich der Querwände 22, 23 ist zwischen den Stirnwänden 20, 21 jeweils eine Zylindermantel-Abschnittswand 24, 25 angeordnet, um dem Drehteil 6 in diesen Bereichen eine Zylindermantel-Außenfläche zu verleihen.

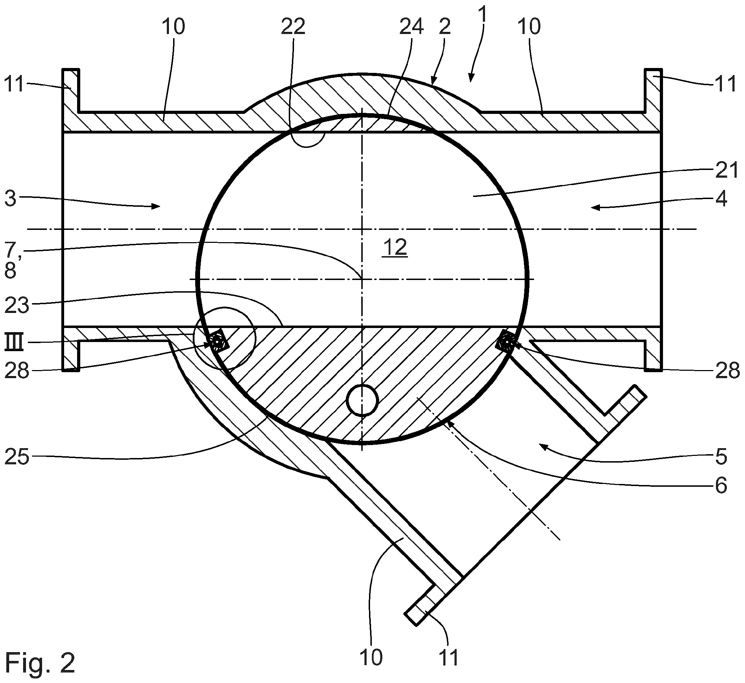

Wie insbesondere aus Fig. 2 deutlich wird, sind die erste Querwand 22 und die erste Zylindermantel-Abschnittswand 24 einteilig ausgeführt. Die zweite Querwand 23 und die zweite Zylindermantel-Abschnittswand 25 sind einteilig ausgeführt und bilden einen Hohlzylinderabschnitt. Die Stirnwände 20, 21 weisen jeweils eine umlaufende stirnseitige Vertiefung 26 auf, die als einteilig an der jeweiligen Stirnwand 20, 21 angeformt ist.

Das Drehteil 6 weist zwei Dichtungsnuten 28 auf, die jeweils einer Innenfläche 27 des Gehäuses 2 zugewandt sind. Die Dichtungsnuten 28 erstrecken sich parallel zur Drehachse 7. Die Dichtungsnuten 28 verlaufen linear und werden auch als Längsnuten bezeichnet. Die Dichtungsnut 28 hat einen rechteckigen Nutquerschnitt mit einer Nutbreite b_{N} und einer Nuttiefe trr. Der Nutquerschnitt ist radial zur Drehachse 7 orientiert, also mit der Nutöffnung in radialer Richtung der Innenfläche 27 des Gehäuses 2 zugewandt. Entsprechend ist die Nuttiefenrichtung radial bezüglich der Drehachse 7 orientiert. Die Nutbreitenrichtung ist senkrecht zur Radialrichtung orientiert, insbesondere tangential bezüglich eines Schnittpunktes der Radialrichtung mit der Innenfläche 27 des Gehäuses 2.

Das Drehteil 6 weist zwei Dichtungselemente 29, 30 auf. Die beiden Dichtungselemente 29, 30 sind jeweils aus einem Dichtungsmaterial hergestellt. Die Dichtungselemente 29, 30 weisen jeweils zwei Axialabschnitte 31 und jeweils zwei Umfangsabschnitte 32 auf, die abwechselnd und jeweils wechselweise derart aneinander angeordnet sind, dass die Dichtungselemente 29, 30 jeweils als endlos umlaufende Dichtungen ausgeführt sind.

Die Dichtungselemente 29, 30 sind jeweils mit den Axialabschnitten 31 in den Dichtungsnuten 28 angeordnet. Insbesondere sind beide Dichtungselemente 29, 30 jeweils mit ihrem Axialabschnitt 31 in den Dichtungsnuten 28 angeordnet. Die Axialabschnitte 31 erstrecken sich parallel zur Drehachse 7. Die Umfangsabschnitte 32 erstrecken sich jeweils in Umfangsrichtung um die Drehachse 7 und sind an der Vertiefung 26 der Stirnwände 20, 21 angelegt. In Drehrichtung um die Drehachse 7 erstreckt sich der Umfangsabschnitt 32 des ersten Dichtungselements 29 um etwa 200°. Entsprechend beträgt der Drehwinkel um die Drehachse 7 bezüglich des Umfangsabschnitts 32 des zweiten Dichtungselements 30 etwa 160°. In Abhängigkeit der Position der Dichtungsnuten 28 in Umfangsrichtung bezüglich der Drehachse 7 können die entsprechenden Öffnungswinkel der Umfangsabschnitte 32 der Dichtungselemente 29, 30 auch variieren.

Die Umfangsabschnitte 32 sind in der Vertiefung 26 jeweils mittels einer ringförmigen Spannscheibe 33 axial gehalten und insbesondere in axialer Richtung angepresst. Die Spannscheibe 33 ist insbesondere mit Befestigungselementen, insbesondere Senkkopfschrauben, an den Stirnwänden 20, 21 lösbar befestigt.

Die Dichtungselemente 29, 30 weisen einen Dichtungsquerschnitt mit einer Außenkontur auf, die zumindest abschnittsweise konkav, insbesondere als Kerbe 34, ausgebildet ist. Die Kerbe 34 ist im Wesentlichen U-förmig ausgeführt. Die Kerbe 34 erstreckt sich bei der in die Dichtungsnut 28 eingesetzten Dichtungsanordnung in Nutbreitenrichtung, also quer und insbesondere senkrecht zu Nuttiefenrichtung. Die beiden in die Dichtungsnut 28 eingesetzten Dichtungselemente 29, 30 sind einander gegenüberliegend derart angeordnet, dass die geöffneten Kerben 34 einander zugewandt angeordnet sind. Der Dichtungsquerschnitt ist im Wesentlichen B- oder K-förmig ausgeführt.

Der Dichtungsquerschnitt weist weiterhin eine gekrümmte, insbesondere konvex ausgeführte Gehäusedichtfläche 35 auf. Die Gehäusedichtfläche 35 dient zum abdichtenden Anliegen der Dichtungselemente 29, 30 an der Innenfläche 27 des Gehäuses 2. Insbesondere steht die Gehäusedichtfläche 35 an der Dichtungsnut 28 in radialer Richtung bezüglich der Drehachse 7 vor und wird durch den Kontakt an der Innenfläche 27 elastisch deformiert, also in die Dichtungsnut 28 hineingedrückt.

Die Kerbe 34 unterteilt den Dichtungsquerschnitt in einen Dichtungsinnenteil 36, mit dem Dichtungselement 29 im Nutgrund angeordnet ist, und ein Dichtungsaußenteil 37, mit dem das Dichtungselement 29 dem Gehäuse 2 zugewandt ist. Das Dichtungsinnenteil 36 weist eine erste Dicke D₁ und das Dichtungsaußenteil 37 eine zweite Dicke D₂ auf. Die zweite Dicke D₂ ist kleiner als die erste Dicke D₁.

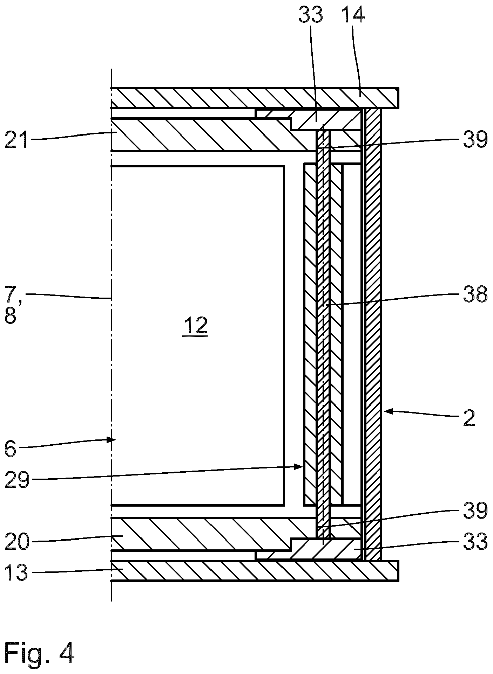

Zur Fixierung der Dichtungselemente 29, 30 in der Dichtungsnut 28 dient jeweils ein Fixierstab 38. Der Fixierstab ist insbesondere als Zylinderstab mit Vollquerschnitt ausgeführt und durch entsprechende Durchgangsöffnungen 39 in die Stirnwände 20, 21 hindurchgeführt. Die Fixierstäbe 38 sind radial und in Umfangsrichtung bezüglich der Drehachse 7 zuverlässig am Drehteil 6 gehalten, insbesondere an den Stirnwänden 20, 21. Eine axiale Fixierung des Fixierstabs 38 am Drehteil 6 ist durch die Spannscheiben 33 gewährleistet, was insbesondere in Fig. 4 dargestellt ist.

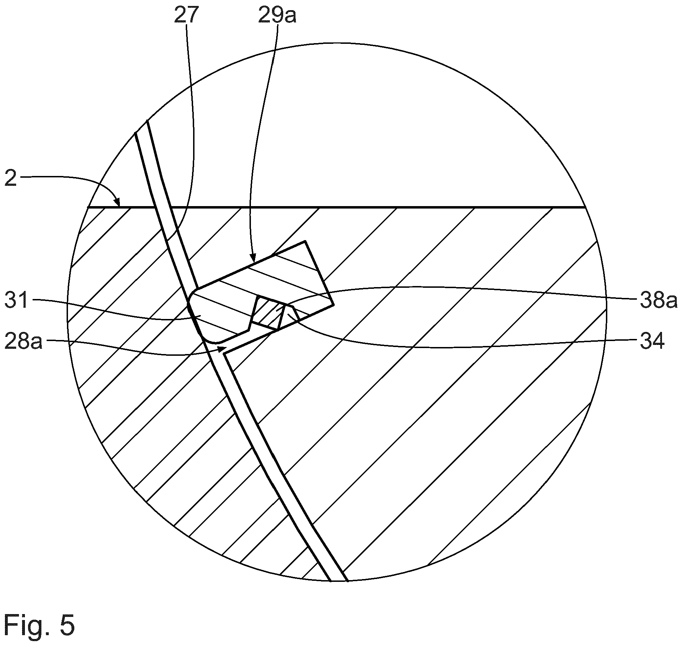

Im Folgenden wird unter Bezugnahme auf Fig. 5 ein zweites Ausführungsbeispiel beschrieben. Konstruktiv identische Teile erhalten dieselben Bezugszeichen wie bei dem vorherigen Ausführungsbeispiel, auf dessen Beschreibung hiermit verwiesen wird. Konstruktiv unterschiedliche. Jedoch funktionell gleichartige Teile erhalten dieselben Bezugszeichen mit einem nachgestellten a.

Der wesentliche Unterschied gegenüber dem vorherigen Ausführungsbeispiel besteht darin, dass in der Dichtungsnut 28a genau ein Dichtungselement 29a angeordnet ist, das mit dem Fixierstab 38a fixiert ist.

Es hat sich gezeigt, dass es ausreicht, wenn nur eine einzige Formdichtung 29a verwendet wird. Der Gesamtaufwand für die Herstellung der Dichtungsanordnung und der damit ausgestatteten Baugruppe ist reduziert.

Die Funktionsweise der Dichtung und insbesondere deren Fixierung in der Dichtungsnut 28a ist im Übrigen identisch.

### Bezugszeichen

- 1 -: Weiche
- 2 -: Gehäuse
- 3 -: Schüttgut-Zuführöffnung
- 4 -: Schüttgut-Abführöffnung
- 5 -: Schüttgut-Abführöffnung
- 6 -: Drehteil
- 7 -: Drehachse
- 8 -: Mittellängsachse
- 9 -: Innenbohrung
- 10 -: Rohrstutzen
- 11 -: Befestigungsflansch
- 12 -: Durchgangskanal
- 13 -: Erster Gehäuse-Seitendeckel
- 14 -: Zweiter Gehäuse-Seitendeckel
- 15 -: Lagerstutzen
- 16 -: Antrieb
- 20 -: Erste Stirnwand
- 21 -: Zweite Stirnwand
- 22 -: Erste Querwand
- 23 -: Zweite Querwand
- 24 -: Erste Zylindermantel-Abschnittswand
- 25 -: Zweite Zylindermantel-Abschnittswand
- 26 -: Vertiefung
- 27 -: Innenfläche
- 28 -: Dichtungsnut
- 29 -: Erstes Dichtungselement
- 30 -: Zweites Dichtungselement
- 31 -: Axialabschnitt
- 32 -: Umfangsabschnitt
- 33 -: Spannscheibe
- 34 -: Kerbe
- 35 -: Gehäusedichtfläche
- 36 -: Dichtungsinnenteil
- 37 -: Dichtungsaußenteil
- 38 -: Fixierstab
- 39 -: Durchgangsöffnung

## Patentansprüche

1. Dichtungsanordnung für eine Baugruppe für die Schüttgutförderung, wobei die Dichtungsanordnung umfasst
a. ein Gehäuse (2) mit einer Schüttgut-Zuführöffnung (3) und mit mindestens einer Schüttgut-Abführöffnung (4, 5),
b. eine im Gehäuse (2) verlagerbar angeordnete Bewegungskomponente (6),
c. eine an dem Gehäuse (2) oder an der Bewegungskomponente (6) ausgebildete Dichtungsnut (28, 28a), in der mindestens ein Dichtungselement (29, 30; 29a) angeordnet ist, wobei das mindestens eine Dichtungselement (29, 30; 29a) einen Dichtungsquerschnitt mit einer zumindest abschnittsweise konkav ausgebildeten Außenkontur (34) aufweist,
d. einen Fixierstab (38; 38a), mit dem das mindestens eine Dichtungselement (29, 30; 29a) in der Dichtungsnut (28; 28a) gehalten ist, wobei der Fixierstab (38; 38a) zumindest abschnittsweise an der konkav ausgebildeten Außenkontur (34) anliegt.

2. Dichtungsanordnung gemäß Anspruch 1, **dadurch gekennzeichnet, dass** die konkav ausgebildete Außenkontur als Kerbe (34) ausgeführt ist.

3. Dichtungsanordnung gemäß einem der vorstehenden Ansprüche,
**dadurch gekennzeichnet, dass** mehrere Dichtungselemente (29, 30) in der Dichtungsnut (28) angeordnet sind.

4. Dichtungsanordnung gemäß Anspruch 3, **dadurch gekennzeichnet, dass** die Dichtungselemente (29, 30) jeweils mit der konkav ausgebildeten Außenkontur (34) einander zugewandt in der Dichtungsnut (28) angeordnet sind, wobei der Fixierstab (38) zumindest abschnittsweise an mehreren, insbesondere an sämtlichen, konkav ausgebildeten Außenkonturen (34) angeordnet ist.

5. Dichtungsanordnung gemäß einem der vorstehenden Ansprüche,
**dadurch gekennzeichnet, dass** der Dichtungsquerschnitt eine Dichtfläche (35) aufweist, mit der das jeweilige Dichtungselement (29, 30; 29a) an einer Kontaktfläche (27) der Bewegungskomponente (6) bzw. des Gehäuses (2) abdichtend anliegt.

6. Dichtungsanordnung gemäß einem der vorstehenden Ansprüche ,
**dadurch gekennzeichnet, dass** der Dichtungsquerschnitt eine erste Dicke (D₁) und eine zweite Dicke (D₂) aufweist, die kleiner ist als die erste Dicke (D₁), wobei das mindestens eine Dichtungselement (29, 30) mit der zweiten Dicke (D₂) im Nutgrund angeordnet ist.

7. Dichtungsanordnung gemäß einem der vorstehenden Ansprüche,
**dadurch gekennzeichnet, dass** der Fixierstab (38; 38a) an der Bewegungskomponente (6) befestigt ist.

8. Dichtungsanordnung gemäß einem der vorstehenden Ansprüche,
**dadurch gekennzeichnet, dass** das mindestens eine Dichtungselement (29, 30; 29a) als umlaufende Formdichtung einteilig ausgeführt ist.

9. Dichtungsanordnung gemäß einem der vorstehenden Ansprüche,
**dadurch gekennzeichnet, dass** die Dichtungsnut (28; 28a) einen rechteckigen Nutquerschnitt aufweist.

10. Baugruppe für die Schüttgutförderung mit einer Dichtungsanordnung gemäß einem der vorstehenden Ansprüche, **dadurch gekennzeichnet, dass** die die Bewegungskomponente als Drehteil (6) ausgeführt ist, das bezüglich einer Drehachse (7) drehbar im Gehäuse (2) angeordnet ist.
